# EUROPEAN PATENT SPECIFICATION

(11) **EP 4 069 486 B1**
(45) Date of publication and mention of the grant of the patent: **08.05.2024**
(21) Application number: 20816512.6
(22) Date of filing: 04.12.2020
(51) Int. Cl.: B28C 7/02, B28C 7/04, B28C 5/02, C21C 5/44, B28C 7/16, B21B 41/02

(54) **METHOD AND APPARATUS FOR BATCH PRODUCTION OF, AND CONTINUOUS APPLICATION OF, A REFRACTORY COMPOSITION TO A SURFACE**
VERFAHREN UND VORRICHTUNG ZUR BATCH-HERSTELLUNG UND KONTINUIERLICHEN ANWENDUNG EINER FEUERFESTEN ZUSAMMENSETZUNG AUF EINER OBERFLÄCHE
METHODE ET APPAREIL POUR PRODUIRE EN LOTS ET APPLIQUER EN CONTINU UNE COMPOSITION REFRACTAIRE SUR UNE SURFACE

(30) Priority: 06.12.2019 EP 19214069
(43) Date of publication of application: 12.10.2022
(73) Proprietor: Vesuvius U S A Corporation, Champaign, IL 61822 (US); Vesuvius Group S.A, 7011 Ghlin (BE)
(72) Inventor: MOHANTY, Bedadibhas, Cranberry Township, Pennsylvania 16066 (US); SELF, David, R., Massillon, OHIO 44646 (US)
(74) Representative: Brohez, Véronique
(86) International application number: PCT/EP2020/084735
(87) International publication number: WO 2021/110967

(56) References cited:
- EP-A1- 0 286 513
- WO-A1-97/11802
- AU-B2- 418 931
- CN-A- 109 530 667
- DE-A1- 4 217 373

## Description

### BACKGROUND

Tundishes and ladles are intermediate containment vessels used in processing metals and metal alloys. These vessels contain a permanent refractory lining material, which is resistant to high temperatures. Typically, these permanent linings are formed from bricks or castables, and comprise 50 to 70% Al₂O₃. Although these permanent lining materials are highly resistant to elevated temperatures, contact with molten metal and slag, and numerous heating and cooling cycles during the processing of molten metals can degrade the permanent liner, so that frequent replacement of the permanent liner is required. Therefore, disposable liners, formed of dry vibratable, trowellable, gunnable, or sprayable refractory materials are formed upon the permanent liner of a tundish or other molten metal processing vessel to extend the useful life of the permanent liner.

In the spraying process for application of a refractory formulation to a permanent liner, refractory powder is mixed with water, and with such additives as binders, wetting agents and dispersants, to produce a slurry. The slurry is conveyed under pressure to a spray nozzle, where compressed air is introduced to propel the slurry from the nozzle. The spraying process accommodates homogeneous mixing, because mixing occurs before the components reach the nozzle, and the mixing time is not limited to the contact time of two components within a spray nozzle.

The mixing of water and refractory powder may be accomplished in a batch process, in which predetermined quantities of the water and refractory powder are enclosed in a container and are subjected to procedures such as stirring. Batch processes offer the ease of controlling processing conditions, such as the intensity of stirring, the energy introduced into the sample by stirring, and the amount of air entrained into the sample. The mixing of water and refractory powder may also be accomplished at a continuous process, in which water and refractory powder are introduced into a container inlet and are combined and processed as they pass through the container to a container outlet. However, controlling process conditions is difficult in a continuous process. The spraying process is, for the most part, a continuous process, though the rate of application of the slurry may vary and may be interrupted for various reasons. The need for slurry in the application process is not constant. Nonetheless, the spraying process is dependent on a constant supply of slurry.

It has been found that properties, such as density and porosity, of certain sprayed refractory formulations are dependent on factors such as the presence of additives such as foaming agents in the slurry in combination with the intensity of stirring of the slurry, and the length of time over which stirring of the slurry occurs. These factors are more easily controlled in a batch process than in a continuous process, but the need to produce consecutive batches of slurry to feed the spray nozzle requires that the rate of slurry consumption and the amount of slurry available must be monitored so that the mixing of slurry can be controlled if batch mixing is used.

WO199711802 to Daussan discloses a method and device for producing and spraying an aqueous slurry. The aqueous slurry is mechanically stirred to foam and/or swell the surfactant and the stirring power and/or speed and/or time are adjusted in order to control the foaming and/or swelling rate of the surfactant and thus vary the porosity of the sprayed coating. However, there is no disclosure of a method or apparatus in which the start of a batch process feeding a continuous application process is controlled by data produced by a sensor on a storage vessel directly feeding an applicator so that a constant supply of slurry may be produced.

US4298288 to Weisbrod discloses a mobile concreting method and apparatus in which a plurality of ingredients are fed in a controlled manner into a mixing device to produce a slurry. The slurry is transferred from the mixing device to a nozzle and thence to a a surface to be coated. However, the Weisbrod method is not a batch processing method; the Weisbrod device is not configured for batch processing. Consequently, there is no disclosure of a method or apparatus in which the start of a batch process feeding a continuous application process is controlled by data produced by a sensor on a storage vessel directly feeding an applicator so that a constant supply of slurry may be produced.

EP0286513A1 ((DAUSSAN & CO [FR]) 12 October 1988 (1988-10-12)) is directed to a method and a device for applying an insulating refractory coating comprising at least two layers of equal or unequal thickness, of different compositions and equal or different water contents, onto surfaces such as the interior of a metallurgical vessel. The device incorporates a powder bin, a valve permitting or impeding flow from the powder bin, a mixing member receiving material from the powder bin as well as water, a product vessel receiving material from the mixing member, a sensor sensing the content or level of the mixed material in the sensor, a controller for regulating at least the amount of water in the mixture, and a nozzle for applying the mixture. This device can produce formulations with preselected densities by varying the amounts of components admitted to a batch process, but is unable to control the mix energy introduced into a batch process over a defined period of time to produce formulations with preselected densities.

DE4217373A1 ((KLAUS OBERMANN GMBH [DE]) 16 December 1993 (1993-12-16)) discloses an apparatus for preparing mixtures or suspensions containing one liquid component (e.g., water-cement mixtures, water-bentonite suspensions and the like), has a mixer which is supplied with dosed amounts of liquid and solid (powder, granulate, paste or slurry) components from separate supply sources and which is followed by a pump for transporting the final mixture in a pipeline leading to a supply container or a consumer. The mixer is a continuous mixer which is supplied continuously with the liquid and solid components in amounts corresponding to the final mixture discharged via the pump. The apparatus is not configured to incorporate a batch process wherein, for example, a controlled amount of mix energy may be introduced into a batch over a defined period of time.

Accordingly, the development of a device and process that provide the advantages of both batch and continuous processes in the combination of components of a refractory formulation for sprayable application would be advantageous, and would enable continuous production of a product in which various density values can be achieved with a single formulation.

### SUMMARY

The invention described in this specification is directed to devices and processes for the batch production of refractory slurries and for their uninterrupted spray application, and is given in the claims.

An exemplary device of the invention contains a batch reactor configured to mix components of a formulation to produce a refractory slurry. The batch reactor is in communication with a plurality of charging inlets. Flow or passage through each reactor charging inlet is regulated by an actuator which controls, for example, a pump, a feeder or a valve installed in the respective inlet. The charging inlets provide communication between respective feed lines or storage vessels, through respective actuators, to the batch reactor. The batch reactor is furnished with a reactor outlet that, when positioned and opened, feeds the contents of the reactor vessel into a product vessel. The product vessel is furnished with a product vessel outlet through which the contents of the product vessel may pass.

The product vessel outlet is in fluid communication with an applicator pump, which is in fluid communication with an applicator by way of an applicator product inlet. An air supply inlet, through which flow is regulated by an air supply valve, is also in communication with the applicator. Within the applicator, the air supply inlet and the product inlet merge to form an outlet, which passes through an applicator nozzle.

A controller accepts information input from a human interface and from sensors. A product quantity sensor provides measurements of the product quantity in the product vessel to the controller. Flow rate sensors provide measurements of the flow rate through the air supply inlet and the product inlet. The controller controls actuators regulating flow or passage through reactor charging inlets. The controller controls actuators regulating the start, stop and speed or intensity of processes, such as mixing, within the batch reactor. The controller controls an actuator affixed to the outlet of the batch reactor that regulates the opening and closing of the batch reactor outlet. The controller controls an application pump actuator, in communication with the applicator pump, which starts, stops, or regulates the rate of transfer of product through the actuator pump. An air supply inlet actuator starts, stops, or regulates the flow of air through the air supply inlet.

The process of applying a refractory formulation according to the invention is carried out in the following manner: Charging inlets are disposed to accept formulation components into a batch reactor. Information is input into the controller, the information including batch formulation, batch mixing time and speed. The controller controls actuators to admit the formulation components into the batch reactor. The controller controls actuators to start batch production, to regulate batch production, and to stop batch production when the process is completed. At the completion of batch production, the controller accepts input from the product vessel quantity sensor, and determines whether the contents of the batch reactor can be accommodated in the product vessel. If the contents of the batch reactor can be accommodated in the product vessel, the controller signals an actuator to open the outlet of the batch reactor, and the processed batch is transferred to the product vessel, and can be conveyed by a slurry pump to the nozzle. Spraying can now begin, and processing of a new batch can commence.

A continuous supply of batch-produced formulation can be maintained as follows:
The controller maintains or collects information on the on/off status of the slurry pump, the presence or absence of a batch in the batch reactor, the size of a batch in the batch reactor, the on/off status of the batch reactor drive, the remaining mixing time for a batch in the batch reactor, the amount of slurry in the product vessel, and whether the batch production and continuous application device is being initialized (i.e., the product vessel is being partially or completely filled with slurry before spraying commences).

If the device is not being initialized and if the slurry pump is not pumping, no new batches are started.

If the slurry pump is pumping, the amount of slurry in the product vessel is monitored on a regular basis, and the accommodation amount of the product vessel is derived. The accommodation amount of the product vessel is the amount of slurry that can be accepted from the batch reactor; it is the result of subtraction of the amount of slurry in the product vessel from the amount of slurry that can be accepted from the batch reactor when the product vessel is empty. The accommodation amount of the product vessel is compared with the amount of slurry in the batch reactor. The controller performs actions on the comparison of accommodation amount (AA) in the product vessel with the amount of slurry in the batch reactor (BR), the presence/absence of a batch (Y/N) in the batch reactor, the on/off status of the batch reactor drive (BRD), and the remaining mixing time (RMT) for a batch in the batch reactor.

For AA > BR, BR: N, and BRD OFF, formulation components are admitted to the batch reactor, and BRD is turned ON to initiate batch processing. The situation in which AA>BR, BR: N, and BRD: ON does not occur in normal operation.

For AA > BR, BR: Y, BRD OFF, and RMT > 0, BRD is turned ON to complete batch processing. At the completion of batch processing, BRD is turned OFF and the processed batch is discharged from the batch reactor.

For AA > BR, BR: Y, BRD ON, and RMT > 0, BRD remains ON until the batch processing is completed, at which time BRD is turned OFF and the processed batch is discharged from the batch reactor.

For AA > BR, BR: Y, BRD ON, and RMT = 0, BRD is turned OFF and the processed batch is discharged from the batch reactor.

For AA > BR, BR: Y, BRD OFF, and RMT = 0, the processed batch is discharged from the batch reactor.

For AA < BR, BR: N, and BRD OFF, no action is taken until AA > BR. The situation in which AA < BR, BR: N and BRD ON does not occur in normal operation.

For AA < BR, BR: Y, BRD ON, and RMT > 0, BRD is turned OFF until AA > BR.

For AA < BR, BR: Y, BRD OFF, and RMT > 0, BRD remains OFF until AA > BR.

For AA < BR, BR: Y, BRD ON and RMT = 0, BRD is turned OFF and the processed batch is retained in the batch reactor.

For AA < BR, BR: Y, BRD OFF and RMT = 0, BRD remains off and the processed batch is retained in the batch reactor.

### BRIEF DESCRIPTION OF THE DRAWINGS

Various features and characteristics of the invention described in this specification may be more thoroughly understood by reference to the accompanying figures, in which:
Figure 1 is a schematic representation of a refractory slurry production and application device; and
Figure 2 is a schematic representation of the data acquisition and control elements of a refractory slurry production and application device.

The reader will appreciate the foregoing features and characteristics, as well as others, upon considering the following detailed description of the invention.

### DESCRIPTION

The refractory compositions described in this specification produce working linings or other refractory structures that provide anti-oxidation barrier properties during use in metallurgical vessels. As used in this specification, including the claims, the term "working lining" means an innermost refractory layer that contacts molten metal contained in a metallurgical vessel. As used in this specification, including the claims, the term "metal" means both metals and metallic alloys. As used in this specification, the expression "in receiving communication with" is used to describe a device or element of a device that accepts data, such as data in electronic form, being emitted from another device or element of a device. As used in this specification, the expression "in sensing communication with" is used to describe a device or element of a device that measures, analyzes, or otherwise derives information from another device, element of a device, content of a device, or a material sample. As used in this specification, the expression "in controlling communication with" is used to describe a device or element of a device that transmits commands to another device or element of a device. As used in this specification, the expression "in communication with" is used to express contact that may be either indirect, by way of an intermediate element, or direct, in which an intermediate element is not present.

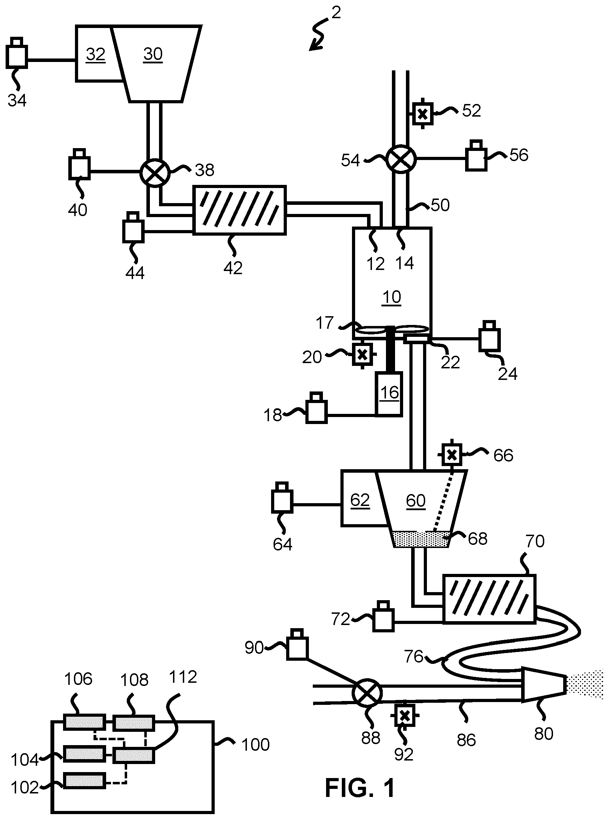

FIG. 1 is a schematic depiction of configuration of a batch production and continuous application device **2** containing a batch reactor **10.** The batch reactor **10** is furnished with a powder feed port **12** and a water feed inlet **14.** Batch reactor **10** is equipped with a batch reactor drive **16,** which is attached to, in mechanical communication with, and able to impart motion to mixing assembly **17,** which may comprise blending, combining, agitating or stirring elements such as paddles and blades, within batch reactor **10.** Batch reactor drive **16** is regulated by batch reactor drive regulator **18;** Batch reactor drive regulator **18** is in controlling communication with batch reactor drive **16.** Batch reactor drive regulator **18** may start, stop, or vary the speed of, mixing assembly **17** within batch reactor **10.** Load measurement sensor **20** provides weight measurements of the contents of batch reactor **10.** Load measurement sensor **20** is in sensing communication with batch reactor **10.**

The contents of the batch reactor are removed through batch reactor door **22,** which is regulated by batch reactor door actuator **24;** batch reactor door actuator **24** opens and shuts batch reactor door **22.** Batch reactor door **22** constitutes an outlet of batch reactor **10.** Batch reactor door actuator **24** is in controlling communication with door **22.** A 5 port 2-way directional valve in communication with batch reactor door actuator **24** may be used to operate batch reactor door **22.**

A powder bin **30** is equipped with a powder bin vibratory device **32** regulated by a powder bin vibratory actuator **34.** Powder bin vibratory device **32** may be attached to powder bin **30,** or may be in communication with powder bin **30.** Powder bin vibratory device actuator **34** is in controlling communication with powder bin vibratory device **32.** Powder is fed from powder bin **30,** through powder feed valve **38** regulated by a powder feed valve regulator **40,** to the inlet of a powder feeder **42** having an inlet and an outlet, containing a motor, and containing a material transfer device such as a screw or auger. Powder feeder **42** is controlled by powder feeder regulator **44.** Powder feeder regulator **44** enables the transfer of the selected amount of powder to batch reactor **10.** Measurements from load measurement sensor **20** are processed and provided to powder feeder regulator **44** to charge batch reactor **10** with a predetermined amount of powder. Powder exiting powder feeder **42** is fed to powder feed port **12** of batch reactor **10.** A 5 port 2-way directional valve may be used as powder feed valve **38.** Powder feed valve **38** and powder feed valve regulator **40** may be integrated. Powder bin **30** has an outlet; powder feed valve **38** may be located at or near the powder bin outlet; powder feed valve regulator **40** is in controlling communication with powder feed valve **38.** The outlet of powder bin **30** is in communication with the inlet of the batch reactor.

A water supply line **50** passes by or through a water flow sensor **52** and through a water valve **54** controlled by water valve actuator **56** into water feed inlet **14** of batch reactor **10.** Water valve actuator **56** enables the transfer of the selected amount of water into batch reactor **10.** Water valve actuator **56** is in controlling communication with water valve **54.** Water flow sensor **52** is in sensing communication with water supply **50.** Water flow sensor **52** may contain a water rotor and a Hall effect sensor.

After mixing, the contents of batch reactor **10** are fed into product vessel **60** through batch reactor door **22.** Product vessel **60** has an inlet and an outlet; the inlet of product vessel **60** is configured to receive the contents of batch reactor **10** through door **22.** In the configuration shown; door **22** is located above the inlet to product vessel **60,** and contents of patch reactor **10** passing through door **22** fall into product vessel **60.** Product vessel **60** is equipped with a product vessel vibratory device **62** regulated by a product vessel vibratory actuator **64.** Product vessel vibratory device **62** may be attached to product vessel **60,** or may be in communication with product vessel **60.** Product vessel vibratory actuator **64** is in controlling communication with product vessel vibratory device **62.** Product vessel **60** is equipped with a product vessel measuring sensor **66** for the measurement of slurry quantity **68** within product vessel **60.** Product vessel content sensor **66** is in sensing communication with the content **68** of product vessel **60.** Product vessel **60** may be provided with a lower portion in the shape of a frustum with its minimum radius disposed adjacent to product vessel **60** outlet.

The contents of product vessel **60** are fed into the inlet of slurry pump **70.** Slurry pump **70** has an inlet and an outlet. The inlet of slurry pump **70** is in direct or indirect communication with the outlet of product vessel **60.** Slurry pump **70** contains a motor and a material transfer configuration such as a screw. Slurry pump **70** is regulated by slurry pump regulator **72.** Slurry pump regulator **72** is in controlling communication with slurry pump **70.**

The output of slurry pump **70** is propelled through slurry hose **76** to nozzle **80.** The outlet of slurry pump **70** is in communication with the inlet of nozzle **80.**

Air passes through an air hose **86,** through an air supply valve **88** regulated by air supply valve actuator **90** and past or through air flow sensor **92** to nozzle **80.** Air flow sensor **92** may be an analog device or a digital device.

In nozzle **80,** air is injected into the slurry stream just prior to the point of exit. The slurry is propelled from the exit point of nozzle **80.** Nozzle **80** has an inlet and an outlet. The nozzle inlet receives the output of the outlet of the product vessel **60;** the nozzle inlet receives the output of air hose **86.** The nozzle inlet may be divided into separate chambers, including a chamber to receive the output of the outlet of the product vessel **60,** and a chamber to receive output of air hose **86;** in this configuration, the product vessel chamber and the air chamber meet within nozzle **80** to communicate with the nozzle outlet. The flow of air in air hose **86** is regulated by air supply valve **88** and controlled by an air supply valve actuator **90.**

Control of batch production and continuous application device 2 is achieved by controller **100,** comprising controller human/machine interface (HMI) display **102,** control panel **104,** command transmission port **106,** data acquisition port **108** and processor **112.** The human/machine interface display **102** is a device that permits interaction between a human being and a machine; it may accept and implement control instructions of an operator, and may present information to an operator about the state of a process. Control panel **104** is a surface that may contain manual controls, such as switches, buttons, knobs, or keypads, for device operation, and may contain display components, such as gauges and video screens, for providing device status information.

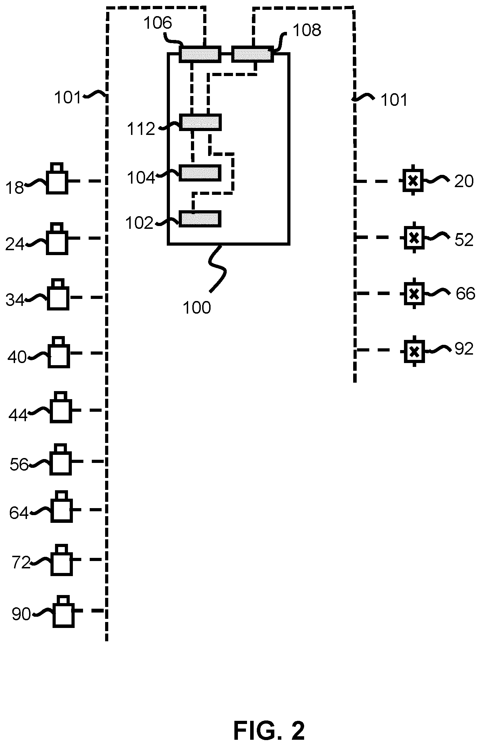

FIG. 2 is a schematic depiction of the controller **100** and controller connections **101** of a device according to FIG. 1. The controller comprises a human/machine interface display **102** and a control panel **104,** for viewing process data and entering commands, respectively. The human/machine interface display **102** and the control panel **104** may be separate devices or an integrated device.

Controller **100** contains a command transmission port **106.** The controller is linked, through command transmission port **106,** to batch reactor drive regulator **18,** batch reactor door actuator **24,** powder bin vibratory actuator **34,** powder feed valve regulator **40,** powder feeder regulator **44,** water valve actuator **56,** product vessel vibratory actuator **64,** slurry pump regulator **72,** and air supply valve actuator **90.**

Controller **100** contains a data acquisition port **108.** The controller is linked, through data acquisition port **108,** to load measurement sensor **20,** water flow sensor 52, product vessel measuring sensor **66,** and air flow sensor **92.**

Controller **100** contains a data processor/data storage unit **112** that accepts data input from, and is in receiving communication with, human/machine interface display **102,** control panel **104,** load measurement sensor **20,** water flow sensor **52,** product vessel measuring sensor **66,** and air flow sensor **92.** Data processor/data storage unit **112** performs calculations and logical operations on the data provided from the interface **102,** control panel **104,** sensors **20, 52, 66,** and **92,** and internally stored data. Commands based on the results of the calculations and logical operations are issued through command transmission port to regulators and actuators **18, 24, 34, 40, 44, 56, 64, 72** and **90.** Data processor/data storage unit **112** is in controlling communication with regulators and actuators **18, 24, 34, 40, 44, 56, 64, 72** and **90.**

The connections **101** between the controller and the various actuators and sensors may be made by wire, fiberoptic cable, or by wireless transmission. Devices may communicate by Ethernet/IP.

Specialized elements may be used in the device described herein.

Batch reactor **10** may take the form of a closed vessel equipped with an internal mixing assembly configured to mix the contents of batch reactor **10.** Batch reactor **10** may be equipped with a batch reactor drive **16** such as a 7500-watt gear motor connected to a variable frequency drive, and a mixing assembly **17** that may include mixing blades, such as batch reactor angular mud whip type mixing blades, connected to a rotating shaft driven by batch reactor drive **16.** Batch reactor **10** may take the form of a drum style paddle mixer. A batch reactor **10** formed from a 0.25 cubic meter slurry containment drum will accommodate a 90 kg batch of refractory slurry. A pneumatic piston may be used as batch reactor door actuator **24.** Batch reactor door **22** is typically located in the bottom of batch reactor **10.** Product vessel **60** may be located below batch reactor door **22** so that a completed batch can be dumped from batch reactor **10** into product vessel **60.** In the presence of powder and water the mixer blades rotate at a defined speed and time controlled by the process as directed by the operator setpoints. By introducing low or high shear and intensified mix energy into the batch process over a defined period of time, the slurry physical properties can be altered to a desired result. The power of the motor may be 7500 watts or greater; it has been found that motor power of 7500 watts or greater is required to decrease the density of the refractory batch. Batch reactor drive **16** may be configured to supply at least 7500 watts of mechanical power to mixing assembly **17.**

Load measurement sensor **20** may be a load cell system such as a hydraulic load cell, a pneumatic load cell or a strain gauge load cell. A system with a 9000 kg capacity may be used.

A powder bin vibratory device **32,** regulated by a powder bin vibratory actuator **34,** may be used with powder bin **30** to eliminate bridging, stuck material and uneven flow. Powder bin vibratory device **32** may be electrically or pneumatically powered. Typically, powder bin vibratory device **32** is in physical contact with, or in communication with powder bin **30.** An 1800 kg storage bin may be suitable for use as powder bin **30** in batch production and continuous application device **2.**

Powder feeder **42** may contain a motor, such as a 750-watt electric gear motor connected to a variable frequency drive. Feeding of the powder may be accomplished by a conveyor such as a 10 cm auger-type screw.

Water valve actuator **56** for water valve **54** may be a 2-way fluid solenoid.

Slurry level measuring sensor **66** may be a laser distance sensor. It may be disposed within, or above, product vessel **60.** It may be oriented towards the exit port of product vessel **60.**

Slurry pump **70** may contain a motor, such as a 9300-watt electric gear motor connected to a variable frequency drive. Slurry pump **70** may also contain a hopper paddle feeder and a rotor-stator assembly, and a vibratory air motor. A slurry containment hopper, which may have a volume of 0.17 cubic meters, may be disposed to receive slurry from product vessel **60.** When this configuration is activated, and slurry is present, the pump rotates at varying speeds to feed slurry from the containment hopper by use of the paddle feeder forcing slurry into the rotor stator assembly where slurry is evenly extruded though the pump discharge outlet. The vibratory air motor levels the slurry in the slurry hopper so that vessel measuring sensor **66** obtains accurate measurements of the slurry quantity **68** in product vessel **60.**

In a typical configuration, spray nozzle **80** contains a 30 cm x 2.5 cm diameter hydraulic hose section connected to a cast aluminum nozzle head with an integrated atomizing air and tube and a 12 mm atomizing rubber nozzle cap. When slurry is pumped to the nozzle, low compressed air is injected into the slurry stream just prior to the point of exit (a 12 mm hole concentric with atomizing air tube) This activity creates a conical pattern of slurry that is then applied to the surface.

Air supply valve actuator **90** for air supply valve **88** may be a two-way fluid solenoid.

Machine control may be achieved by using an Allen Bradley Micrologixs 1400 PLC controller as controller **100** and a C-More Human Machine Interface display as human/machine interface display **102.** A human/machine interface display is a screen that allows a user to interact with a device, such as a device conducting or controlling an industrial process.

Formulations that can be used with the disclosed apparatus include alumina formulations containing calcium aluminate cements and dispersing agents. Although the batch production and continuous application device enables the production of refractory slurry with a range of densities from a single mixture of components, it also enables the production of sequential batches of refractory slurry that differ in water content.

The batch production and continuous application device **2** may be configured to prevent production of excess slurry. If the product vessel **60** is unable to keep pace with batch reactor **10,** the product vessel measuring sensor **66** identifies excessive slurry in product vessel **60** (e.g., by providing information to data processor/storage unit **112** for a determination that product vessel **60** cannot accommodate the contents of batch reactor **10),** and data processor/storage unit **112** places batch reactor **10** in a "hold" state until enough slurry has been displaced from product vessel **60** such that an additional batch can be discharged from batch reactor **10** and entirely contained in product vessel **60.** The "hold" state may include halting the mixing process and/or halting the transfer of slurry from batch reactor **10** to product vessel **60.** This may be accomplished in a configuration of device **2** in which data processor/storage unit **112** is configured to process data received from product vessel content sensor **66** to control batch reactor drive regulator **18** and batch reactor door actuator **24.**

The batch production and continuous application device **2** may also be configured so that, if the product vessel **60** is unable to keep pace with batch reactor **10,** the product vessel measuring sensor **66** identifies excessive slurry in product vessel **60** (e.g., by providing information to data processor/storage unit **112** for a determination that product vessel **60** cannot accommodate the contents of batch reactor **10),** and data processor/storage unit **112** deactivates the transfer of powder, water, and other formulation components to batch reactor **10** until enough slurry has been displaced from product vessel **60** such that an additional batch can be discharged from batch reactor **10** and entirely contained in product vessel **60.** This may be accomplished in a configuration of device **2** in which data processor/storage unit **112** is configured to process data received from product vessel content sensor **66** to control powder feed valve regulator **40,** water valve actuator **56,** and batch reactor drive regulator **18.** Data processor/storage unit may also process data received from product vessel content sensor **66** to control batch reactor door actuator **24.**

The batch production and continuous application device **2** may also be configured to prevent interruption of the application process due to a lack of slurry in product vessel **60.** In one configuration, if product vessel measuring sensor **66** detects a predetermined minimum quantity or low level of slurry in product vessel **60,** a signal is sent to controller human/machine interface display **102.** The operator then reduces the maximum speed (rpm) of slurry pump **70.** In another configuration, if product vessel measuring sensor **66** detects a low level of slurry in product vessel **60,** data processor/data storage unit **112** performs a calculation based on the cumulative rate of slurry use (S/T), based on data obtained from the quantity of slurry **68** (S) in product vessel **60,** and remaining mixing time (RMT) of the batch in batch reactor **10.** If (S/T) > (S/(RMT)), slurry pump regulator **72** reduces maximum rate of slurry use so that it is less than (S/(RMT)).

In terms of structure, the outlet of powder bin **30** is in communication with the inlet of powder feed valve **38.** The outlet of powder feed valve **38** is in communication with the inlet of powder feeder **42.** The outlet of powder feeder **42** is in communication with batch reactor powder feed port **12** of batch reactor **10.** Water supply **50** extends from a source of water, through water valve **54** to batch reactor water feed inlet **14.** The outlet of batch reactor **10** is in communication with the inlet of product vessel **60.** The outlet of product vessel **60** is in communication with the input of slurry pump **70.** The outlet of slurry pump **70** is in communication with an inlet, or the inlet, of nozzle **80.** An air supply line extends from a source of pressurized air, through air supply valve **88** and air hose **86,** to an inlet, or the inlet, of nozzle **80.** Air from air hose **86** and the product or contents of slurry hose **76** are combined in nozzle **80** and are sprayed from nozzle **80.**

The method of producing, and continuously applying, a refractory composition to a surface with batch production and continuous application device **2** is carried out as follows: Dry components of the formulation are introduced into powder bin **30.** A powder bin vibratory device **32** may be activated by powder bin vibratory device actuator, which may be controlled by data processor / data storage unit of **112** of controller **100** via command transmission port **106.** An operator enters batch production settings and instructions, such as the batch size, water content, dry component content, mixing time, and mixing speed, as well as the command to start batch production, into controller **100** by way of controller human / machine interface display **102,** control panel **104** or other input device. Controller **100** transmits a command through command transmission port **106** to powder feed valve regulator **40** and powder feed valve **38,** and/or to powder feeder regulator **42,** to transfer dry components from powder bin **30** to an inlet of powder feeder **42.** Dry components are transferred from an outlet of powder feeder **42** to batch reactor powder feed port **12** and into batch reactor **10.** The amount of powder transferred from powder bin **30** into batch reactor **10** may be determined by difference, before and after transfer, by load measurement sensor **20.** Data from load measurement sensor **20** may therefore be used to control the transfer of powder from powder bin **30** to batch reactor **10.**

Controller **100** transmits a command through command transmission port **106** to water valve actuator **56,** and water valve **54,** to introduce water from water supply **50** into batch reactor **10.** The amount of water transferred into batch reactor **10** may be obtained by water flow sensor **52** or determined by difference, before and after transfer, by load measurement sensor **20.** Data from load measurement sensor **20** may therefore be used to control the supply of water to batch reactor **10.** Additional liquid or dissolved components may be introduced into water supply **50** or may be introduced into batch reactor **10** from separate a vessel equipped with a valve and a valve actuator. Controller **100** derives the amount of material (or the mass or density) in batch reactor **109** from data supplied by sensor **52,** and/or sensor **20.**

The process of placing batch components into batch reactor **10** is referred to as "charging." When all batch components have entered batch reactor **10** in the selected quantities, controller **100** transmits a command through command transmission port to batch reactor drive regulator **18** to activate batch reactor drive **16** to start the mixing process within batch reactor **10.** Controller **100** regulates the start, finish, pausing, length of time, and the intensity, of the mixing. Controller **100** also calculates and maintains the value of mixing time remaining. The intensity of mixing is related to the speed of rotation of the mixing configuration, and the configuration of mixing assembly **17** such as mixing blades or paddles, within batch reactor **10.** Batch reactor **10** may contain an agitator of any known type. Batch size, length of time of mixing, and intensity of mixing of a combination of components can be selected on the basis of a calibration table relating combinations of batch size, mixing time and mixing intensity of a particular combination of components to produce a slurry with a specified density.

During batch mixing, controller **100** monitors the content **68** of product vessel **60.** Product vessel content sensor **66** provides this information to controller **100** through data acquisition port **108** so that the amount of product in product vessel **60** may be determined by data processor/data storage unit **112.** If product vessel **60** is unable to accommodate a batch being mixed, controller **100** transmits a command to batch reactor drive actuator **18** to pause batch mixing until product vessel **60** can accommodate the batch. If a batch is not being mixed and product vessel **60** cannot accommodate the next batch to be mixed, the combining of components and initiation of batch mixing are delayed until product vessel **60** can accommodate the batch. Typically, process vessel **60** accommodates at least two batches produced by batch reactor **10,** so the batch mixing process will not need to be halted during the production of the initial batch.

When batch mixing is completed, and the contents of batch mixer **10** can be accommodated by product vessel **60,** controller **100** transmits a command to batch reactor door actuator **24** to open batch reactor door **22.** The contents of batch mixer **10** are thereby transferred to product vessel **60.** Product vessel **60** may be equipped with a product vessel vibratory device **62** in communication with a product vessel vibratory actuator **64.** Product vessel vibratory device **62** may be electrically or pneumatically powdered. Product vessel vibratory device **62** ensures that slurry remains in contact with, and will exit through, an exit port of product vessel **60.** The presence of product in product vessel **60,** which may be sensed by product vessel content sensor **66,** may be received by controller **100** and used by data processor/storage unit **112** to communicate to product vessel vibratory device actuator **64** a command to commence operation of product vessel vibratory device **62.**

The portion of the process occurring before the start of spraying may be referred to as system initialization. When product is present in product vessel **60,** spraying of the slurry may begin. Controller **101** transmits commands to slurry pump regulator **72** to control the rate of pumping of slurry pump **70** to provide product or slurry to nozzle **80,** and to air supply valve actuator **90** to control the rate of air flow through air supply valve **88** and air hose **86** to provide air to nozzle **80.** Slurry flows from slurry pump **70** through slurry hose **76** to nozzle **80;** air flows through air hose **86** to nozzle **80.** Air flow sensor **92** transmits flow rate information to Controller **100;** Controller **100** transmits commands to slurry pump regulator **72** air supply valve actuator **90** to balance the flow rates through slurry pump **70** and air hose **86** so that the slurry is sprayed from nozzle **80** at the intended pressure. The operator may adjust the pumping rate of slurry pump **70** at any time during the process by entering a command through controller human/machine interface display **102** or through control panel **104,** or by manipulating air supply valve actuator **90;** in certain configurations of the apparatus, the pumping rate of slurry pump **70** is maintained at a set ratio to the rate of air flow through air supply valve **88.** Data processor/data storage unit **112** may be configured to generate a ratio of the flow rate through slurry pump **70** to the flow rate through air hose **86,** and to maintain the ratio of the slurry pump flow rate and the air hose flow rate when the air hose flow rate is altered. The operator may halt operation of slurry pump **70** by entering a "stop" command through controller human/machine interface display **102** or through control panel **104,** or by manipulating air supply valve actuator **90;** in certain configurations of the apparatus, slurry pump **70** is shut off when air flow through air supply valve **88** is shut off. In certain configurations of the batch production and continuous application device **2,** the deactivation of slurry pump **70** and/or the air supply after system initialization blocks the initiation of a batch process in batch mixer **10.** Data provided by product vessel content sensor **66** may be received by controller **100** and used by data processor/storage unit **112** to block the initiation of batch processing in batch mixer **10,** or the introduction of formulation components into batch mixer **10,** if a new batch cannot be accommodated by product vessel **60.**

A process making use of the device described herein for batch production of, and continuous application of, a refractory composition to a surface may include the following steps:
(a) providing a batch production and continuous application device **2** according to claim 1;
(b) providing instructions to controller **100.**
(c) utilizing data processor/storage unit **112,** powder feed valve regulator **40** and powder feed valve **38,** and data from product vessel content sensor **66** to control the transfer of powder from powder bin **30** to batch reactor **10** to charge batch reactor **10;**
(d) utilizing data processor/storage unit **112,** batch reactor drive regulator **18,** batch reactor drive **16,** and data from product vessel content sensor **66** to activate, control, and deactivate mixing assembly **17** in batch reactor **10** to process the powder to form a product;
(e) utilizing data processor/storage unit **112,** batch reactor door actuator **24,** and batch reactor door **22,** and data from product vessel content sensor **66** to feed the product from batch reactor **10** into product vessel **60;**
(f) transferring the product from product vessel **60** to a nozzle **80;**
(g) providing air to nozzle **80;**
(h) combining the product with air within nozzle **80;**
(h) spraying the combined air and product; and
(i) repeating steps (c), (d), and (e) to produce a continuous supply of product.

Step (c) may further include (c') utilizing data processor/storage unit **112,** water valve actuator **56,** water valve **54,** and data from product vessel content sensor **66** to control the input of water to batch reactor **10.**

Step (c) may include the limitation that the transfer of powder from powder bin **30** to batch reactor **10** and the input of water to batch reactor **10** is enabled if data processor/storage unit **112** determines that batch reactor **10** is not charged, and that product vessel **60** can accommodate the product to be produced from the powder and water to be input into batch reactor **10,** and that at least one of system initialization (in which a product is produced at the beginning of operation before spraying can commence) and spraying is occurring.

Step (d) may include:
activating mixing assembly **17** if data processor/storage unit **122** determines that slurry pump **70** is activated, that batch reactor **10** is charged, and that product vessel **60** can accommodate the contents of batch reactor **10;**
activating mixing assembly **17** during system initialization if batch reactor **10** is charged, and product vessel **60** can accommodate the contents of batch reactor **10;**
pausing mixing assembly **17** if data processor/storage unit **122** determines that slurry pump **70** is activated, that batch reactor **10** is charged, and that product vessel **60** cannot accommodate the contents of batch reactor **10;**
deactivating mixing assembly **17** if data processor/storage unit **122** determines that batch processing is completed; and
deactivating mixing assembly **17** if data processing/storage unit **122** determines that slurry pump **70** is deactivated.

Data from load measurement sensor **20** may be used to control the transfer of powder from powder bin **30** to batch reactor **10** to charge batch reactor **10,** and to control the supply of water to batch reactor **10.**

### EXAMPLE

Batch production and continuous application device 2 is capable of producing, from a single mixture of components, refractory slurries having a range of densities. The variety of densities is produced by mixing the components with particular values in ranges of mixing times and speeds. A calibration table showing slurry densities produced for various combinations of mixing times, mixing speeds, and spraying pressures enables the device to be programmed, and instructions to be entered, to produce a formulation with a desired density.

### Example 1:

The table below show the results of experiments conducted to correlate batch reactor mixer speed and stirring time to densities as a function of density reduction. The baseline density of this formulation using a conventional continuous mixer is approximately 120 Ib / ft³ (1920 kg / m³). The mixture of dry components contained 93% refractory, 0.25% anionic surfactant, and binding materials. The mixture of dry components was mixed with water to produce a slurry containing 20 wt% water. 200 Ib (90 kg) batches of mixed dry components were batch mixed for 7 minutes. Water was then added, and the batches were mixed for the time periods, and at the speeds, shown in TABLE I. Densities were obtained for slurries as removed from the batch mixer or after spraying, as indicated in the table.

**TABLE I Relationship of mixing speed, mix time, and spraying pressure to density**

| Mixing speed (RPM) | Mix time (min) | Density | Sample |
|---|---|---|---|
| 42 | 3 | 1540 kg/m³ | Out of mixer |
| | | 96.0 lb/ft³ | |
| 42 | 5 | 1450 kg/m³ | Out of mixer |
| | | 90.7 lb/ft³ | |
| 42 | 8 | 1370 kg/m³ | Out of mixer |
| | | 85.4 lb/ft³ | |
| 42 | 8 | 1530 kg/m³ | Sprayed 20 lb/in² (140 kPa) |
| | | 95.7 lb/ft³ | |
| 42 | 8 | 1690 kg/m³ | Sprayed 30 lb/in² |
| | | 105.5 lb/ft³ | (210 kPa) |
| 42 | 8 | 1740 kg/m³ | Sprayed 35 lb/in² (240 kPa) |
| | | 108.8 lb/ft³ | |
| 42 | 8 | 1610 kg/m³ | Sprayed 15 lb/in² (103 kPa) |
| | | 100.4 lb/ft³ | |
| 84 | 5 | 1310 kg/m³ | Out of mixer |
| | | 81.6 lb/ft³ | |
| 84 | 5 | 1790 kg/m³ | Sprayed 20 lb/in² (140 kPa) |
| | | 111.6 lb/ft³ | |
| 84 | 5 | 1590 kg/m³ | Sprayed 10 lb/in² (69 kPa) |
| | | 99.5 lb/ft³ | |
| 84 | 2.5 | 1560 kg/m³ | Out of mixer |
| | | 97.44 lb/ft³ | |
| 84 | 2.5 | 1700 kg/m³ | Sprayed 20 lb/in² (140 kPa) |
| | | 106.44 lb/ft³ | |
| 84 | 2.5 | 1570 kg/m³ | Sprayed 10 lb/in² (69 kPa) |
| | | 97.8 lb/ft³ | |

### Elements:

2. Batch production and continuous application device
10. Batch reactor
12. Batch reactor powder feed port
14. Batch reactor water feed inlet
16. Batch reactor drive
17. Mixing assembly
18. Batch reactor drive regulator
20. Load measurement sensor
22. Batch reactor door
24. Batch reactor door actuator
30. Powder bin
32. Powder bin vibratory device
34. Powder bin vibratory device actuator
38. Powder feed valve
40. Powder feed valve regulator
42. Powder feeder
44. Powder feeder regulator
50. Water supply
52. Water flow sensor
54. Water valve
56. Water valve actuator
60. Product vessel
62. Product vessel vibratory device
64. Product vessel vibratory device actuator
66. Product vessel content sensor
68. Product vessel content
70. Slurry pump
72. Slurry pump regulator
76. Slurry hose
80. Nozzle
86. Air hose
88. Air supply valve
90. Air supply valve actuator
92. Air flow sensor
100. Controller
101. Controller connections
102. Controller human/machine interface display
104. Control panel
106. Command transmission port
108. Data acquisition port
112. Data processor/data storage unit

## Claims

1. A batch production and continuous application device **(2),** comprising:
a powder bin **(30)** having an outlet;
a powder feed valve **(38)** located at the powder bin outlet;
a powder feed valve regulator **(40)** in controlling communication with the powder feed valve **(38);**
a batch reactor **(10)** comprising an inlet **(12),** a door **(22),** a batch reactor drive **(16),** a mixing assembly **(17),** a batch reactor drive regulator **(18),** a door **(22),** and a batch reactor door actuator **(24);** wherein the outlet of powder bin **(30)** is in communication with inlet **(12)** of the batch reactor; wherein batch reactor drive regulator **(18)** is in controlling communication with a batch reactor drive **(16);** wherein batch reactor drive **(16)** is in mechanical communication with mixing assembly **(17);** and wherein a batch reactor door actuator **(24)** is in controlling communication with door **(22);**
a product vessel **(60)** having an inlet and an outlet, wherein the inlet of the product vessel **(60)** is configured to receive the contents of batch reactor **(10)** passing through door **(22);**
a product vessel content sensor **(66)** in sensing communication with the amount of content **(68)** of product vessel **(60);**
a controller **(100)** comprising a data processor/storage unit **(112);** wherein the data processor/storage unit **(112)** is in receiving communication with the product vessel content sensor **(66),** wherein the data processor/storage unit **(112)** is in controlling communication with the powder feed valve regulator **(40);** wherein the data processor/storage unit **(112)** is in controlling communication with the batch reactor drive regulator **(18);** and wherein the data processor/storage unit **(112)** is in controlling communication with the batch reactor door actuator **(24);**
a nozzle **(80)** having an inlet and an outlet, wherein the nozzle inlet receives the output of the outlet of the product vessel **(60);** wherein the nozzle inlet receives the output of an air hose **(86);** and wherein flow of air in air hose **(86)** is regulated by air supply valve **(88)** and controlled by an air supply valve actuator **(90),**
a water valve **(54);**
a water supply **(50),** wherein water supply **(50)** extends through water valve **(54)** to a batch reactor water feed inlet **(14)** of batch reactor **(10);** and
a water valve actuator **(56);** wherein water valve actuator **(56)** is in controlling communication with water valve **(54),** and wherein data processor/storage unit **(112)** is in controlling communication with water valve actuator **(56).**

2. A batch production and continuous application device **(2)** according to claim 1, further comprising:
a powder feeder **(42)** comprising an inlet and an outlet, wherein the outlet of powder bin **(30)** is in communication with the inlet of powder feeder **(42),** wherein the outlet of powder feeder **(42)** is in communication with inlet **(14)** of batch reactor **(10);** and
a powder feeder regulator **(44),** wherein powder feeder **(44)** is in controlling communication with powder feeder **(42);** and wherein data processor/storage unit **(112)** is in controlling communication with powder feeder regulator **(44).**

3. A batch production and continuous application device **(2)** according to any one of the preceding claims, further comprising:
a slurry pump **(70)** comprising an inlet and an outlet, wherein the inlet of slurry pump **(70)** is in communication with the outlet of product vessel **(60);** wherein the outlet of slurry pump **(70)** is in communication with the inlet of nozzle **(80);** and
a slurry pump regulator **(72);** wherein slurry pump regulator **(72)** is in controlling communication with slurry pump **(70);** wherein data processor/storage unit **(112)** is in controlling communication with slurry pump regulator **(72).**

4. A batch production and continuous application device **(2)** according to claim 3, wherein:
data processor/data storage unit **(112)** is configured to generate a ratio of the flow rate through slurry pump **(70)** to the flow rate through air hose **(86),** and to maintain the ratio of the slurry pump flow rate and the air hose flow rate when the air hose flow rate is altered.

5. A batch production and continuous application device **(2)** according to claim 4, further comprising:
a water flow sensor **(52)** in sensing communication with water supply **(50),** wherein data processor/storage unit **(112)** is in receiving communication with water flow sensor **(52).**

6. A batch production and continuous application device **(2)** according to claim 4 or 5, wherein data processor/storage unit **(112)** is configured to process data received from product vessel content sensor **(66)** to control powder feed valve regulator **(40),** water valve actuator **(56),** and batch reactor drive regulator **(18).**

7. A batch production and continuous application device **(2)** according to any one of the preceding claims, further comprising:
a load measurement sensor **(20)** in sensing communication with batch reactor **(10),** wherein data processor/storage unit **(112)** is in receiving communication with load measurement sensor **(20).**

8. A batch production and continuous application device **(2)** according to any one of the preceding claims, further comprising:
a powder bin vibratory device **(32)** in communication with powder bin **(30),**
a powder bin vibratory device actuator **(34);** wherein powder bin vibratory device actuator **(34)** is in controlling communication with powder bin vibratory device **(32);**
a product vessel vibratory device **(62)** in communication with product vessel **(60),** and
a product vessel vibratory actuator **(64),** wherein product vessel vibratory actuator **(64)** is in controlling communication with product vessel vibratory device **(62).**

9. A batch production and continuous application device **(2)** according to any one of the preceding claims, wherein:
batch reactor drive **(16)** is configured to supply at least 7500 watts of mechanical power to mixing assembly **(17).**

10. A process for batch production and continuous application of a refractory formulation, comprising:
(a) providing a batch production and continuous application device (2) according to anyone of claims 1 to 9;
(b) providing instructions to controller **(100);**
(c) utilizing data processor/storage unit **(112),** powder feed valve regulator **(40)** and powder feed valve **(38),** and data from product vessel content sensor **(66)** to control the transfer of a powder from powder bin **(30)** to batch reactor **(10)** to charge batch reactor **(10);**
(d) utilizing data processor/storage unit **(112),** batch reactor drive regulator **(18),** batch reactor drive **(16),** and data from product vessel content sensor **(66)** to activate, control, and deactivate mixing assembly **(17)** in batch reactor **(10)** to process the powder to form a product;
(e) utilizing data processor/storage unit **(112),** batch reactor door actuator **(24),** and batch reactor door **(22),** and data from product vessel content sensor **(66)** to feed the product from batch reactor **(10)** into product vessel **(60);**
(f) transferring the product from product vessel **(60)** to a nozzle **(80);**
(g) providing air to nozzle **(80);**
(h) combining the product with air within nozzle **(80);**
(i) spraying the combined air and product; and
(j) repeating steps (c), (d), and (e) to produce a continuous supply of product; and
wherein batch process and continuation application device **(2)** further comprises a water supply **(50),** a water valve **(54),** and a water valve actuator **(56),** wherein batch reactor **(10)** further comprises a batch reactor water feed inlet **(14);** wherein water supply **(50)** extends through water valve **(54)** to batch reactor water feed inlet **(14);** wherein water valve actuator **(56)** is in controlling communication with water valve **(54),** and wherein data processor/storage unit **(112)** is in controlling communication with water valve actuator **(56);** and wherein step (c) further comprises:
(c') utilizing data processor/storage unit **(112),** water valve actuator **(56),** water valve **(54),** and data from product vessel content sensor **(66)** to control the input of water to batch reactor **(10).**

11. A process for batch production and continuous application of a refractory formulation according to claim 10 , wherein the transfer of powder from powder bin **(30)** to batch reactor **(10)** and the input of water to batch reactor **(10)** is enabled if data processor/storage unit **(112)** determines that batch reactor **(10)** is not charged, and that product vessel **(60)** can accommodate the product to be produced from the powder and water to be input into batch reactor **(10),** and that at least one of a system initialization and a spraying is occurring.

12. A process for batch production and continuous application of a refractory formulation according to any one of claims 10 and 11, wherein batch process and continuous application device **(2)** further comprises a slurry pump **(70)** comprising an inlet and an outlet; wherein device **(2)** further comprises a slurry pump regulator **(72);** wherein the inlet of slurry pump **(70)** is in communication with the outlet of product vessel **(60);** wherein the outlet of slurry pump **(70)** is in communication with the inlet of nozzle **(80);** and wherein slurry pump regulator **(72)** is in controlling communication with slurry pump **(70);** wherein data processor/storage unit **(112)** is in controlling communication with slurry pump regulator **(72);** and wherein step (d) comprises:
activating mixing assembly **(17)** if data processor/storage unit **(112)** determines that slurry pump **(70)** is activated, that batch reactor **(10)** is charged, and that product vessel **(60)** can accommodate the contents of batch reactor **(10);**
activating mixing assembly **(17)** during a system initialization if batch reactor **(10)** is charged, and product vessel **(60)** can accommodate the contents of batch reactor **(10);**
pausing mixing assembly **(17)** if data processor/storage unit **(112)** determines that slurry pump **(70)** is activated, that batch reactor **(10)** is charged, and that product vessel **(60)** cannot accommodate the contents of batch reactor **(10);**
deactivating mixing assembly **(17)** if data processor/storage unit **(112)** determines that batch processing is completed;
deactivating mixing assembly **(17)** if data processing/storage unit **(112)** determines that slurry pump **(70)** is deactivated.

13. A process for batch production and continuous application of a refractory formulation according to anyone of claims 10, 11 and 12, wherein batch process and continuous application device **(2)** further comprises a load measurement sensor **(20)** in sensing communication with batch reactor **(10),** wherein data processor/storage unit **(112)** is in receiving communication with load measurement sensor **(20);** and
wherein data from load measurement sensor **(20)** is used to control the transfer of powder from powder bin **(30)** to batch reactor **(10)** to charge batch reactor **(10),** and to control the supply of water to batch reactor **(10).**

## Patentansprüche

1. Batch-Produktions- und kontinuierliche Aufbringungsvorrichtung (2), umfassend:
einen Pulverkasten (30), der einen Auslass aufweist;
ein Pulverzufuhrventil (38), das sich bei dem Pulverkastenauslass befindet;
einen Pulverzufuhrventilregulator (40) in steuernder Kommunikation mit dem Pulverzufuhrventil (38);
einen Batch-Reaktor (10), der einen Einlass (12), eine Tür (22), einen Batch-Reaktorantrieb (16), eine Mischbaugruppe (17), einen Batch-Reaktorantriebsregulator (18), eine Tür (22) und einen Batch-Reaktortüraktor (24) umfasst; wobei der Auslass von Pulverkasten (30) in Kommunikation mit Einlass (12) des Batch-Reaktors ist; wobei Batch-Reaktorantriebsregulator (18) in steuernder Kommunikation mit einem Batch-Reaktorantrieb (16) ist; wobei Batch-Reaktorantrieb (16) in mechanischer Kommunikation mit Mischbaugruppe (17) ist; und wobei ein Batch-Reaktortüraktor (24) in steuernder Kommunikation mit Tür (22) ist;
ein Produktgefäß (60), das einen Einlass und einen Auslass aufweist, wobei der Einlass des Produktgefäßes (60) dazu konfiguriert ist, den Inhalt von Batch-Reaktor (10) zu empfangen, der durch Tür (22) durchgeht;
einen Produktgefäßinhaltssensor (66) in erfassender Kommunikation mit der Menge von Inhalt (68) von Produktgefäß (60);
eine Steuereinheit (100), die eine Datenprozessor/SpeicherEinheit (112) umfasst; wobei die Datenprozessor/Speicher-Einheit (112) in empfangender Kommunikation mit dem Produktgefäßinhaltssensor (66) ist, wobei die Datenprozessor/Speicher-Einheit (112) in steuernder Kommunikation mit dem Pulverzufuhrventilregulator (40) ist; wobei die Datenprozessor/Speicher-Einheit (112) in steuernder Kommunikation mit dem Batch-Reaktorantriebsregulator (18) ist; und wobei die Datenprozessor/Speichereinheit (112) in steuernder Kommunikation mit dem Batch-Reaktortüraktor (24) ist;
eine Düse (80), die einen Einlass und einen Auslass aufweist, wobei der Düseneinlass die Ausgabe des Auslasses des Produktgefäßes (60) empfängt; wobei der Düseneinlass die Ausgabe eines Luftschlauchs (86) empfängt; und wobei Luftstrom in Luftschlauch (86) durch Luftversorgungsventil (88) reguliert wird und durch einen Luftversorgungsventilaktor (90) gesteuert wird;
ein Wasserventil (54);
eine Wasserversorgung (50), wobei sich Wasserversorgung (50) durch Wasserventil (54) zu einem Batch-Reaktorwasserzufuhreinlass (14) von Batch-Reaktor (10) erstreckt; und
einen Wasserventilaktor (56); wobei Wasserventilaktor (56) in steuernder Kommunikation mit Wasserventil (54) ist und wobei Datenprozessor/Speicher-Einheit (112) in steuernder Kommunikation mit Wasserventilaktor (56) ist.

2. Batch-Produktions- und kontinuierliche Aufbringungsvorrichtung (2) nach Anspruch 1, weiter umfassend:
einen Pulverzulieferer (42), der einen Einlass und einen Auslass umfasst, wobei der Auslass von Pulverkasten (30) in Kommunikation mit dem Einlass von Pulverzulieferer (42) ist, wobei der Auslass von Pulverzulieferer (42) in Kommunikation mit Einlass (14) von Batch-Reaktor (10) ist; und
einen Pulverzuliefererregulator (44), wobei Pulverzulieferer (44) in steuernder Kommunikation mit Pulverzulieferer (42) ist; und wobei Datenprozessor/Speicher-Einheit (112) in steuernder Kommunikation mit Pulverzuliefererregulator (44) ist.

3. Batch-Produktions- und kontinuierliche Aufbringungsvorrichtung (2) nach einem der vorstehenden Ansprüche, weiter umfassend:
eine Schlämmenpumpe (70), die einen Einlass und einen Auslass umfasst, wobei der Einlass von Schlämmenpumpe (70) in Kommunikation mit dem Auslass von Produktgefäß (60) ist; wobei der Auslass von Schlämmenpumpe (70) in Kommunikation mit dem Einlass von Düse (80) ist; und
einen Schlämmenpumpenregulator (72); wobei Schlämmenpumpenregulator (72) in steuernder Kommunikation mit Schlämmenpumpe (70) ist; wobei Datenprozessor/Speicher-Einheit (112) in steuernder Kommunikation mit Schlämmenpumpenregulator (72) ist.

4. Batch-Produktions- und kontinuierliche Aufbringungsvorrichtung (2) nach Anspruch 3, wobei:
Datenprozessor/Datenspeicher-Einheit (112) dazu konfiguriert ist, ein Verhältnis der Strömungsrate durch Schlämmenpumpe (70) zu der Strömungsrate durch Luftschlauch (86) zu erzeugen und das Verhältnis der Schlämmenpumpenströmungsrate und der Luftschlauchströmungsrate beizubehalten, wenn die Luftschlauchströmungsrate verändert wird.

5. Batch-Produktions- und kontinuierliche Aufbringungsvorrichtung (2) nach Anspruch 4, weiter umfassend:
einen Wasserstromsensor (52) in erfassender Kommunikation mit Wasserversorgung (50), wobei Datenprozessor/Speicher-Einheit (112) in empfangender Kommunikation mit Wasserstromsensor (52) ist.

6. Batch-Produktions- und kontinuierliche Aufbringungsvorrichtung (2) nach Anspruch 4 oder 5, wobei Datenprozessor/Speicher-Einheit (112) dazu konfiguriert ist, Daten zu verarbeiten, die von Produktgefäßinhaltssensor (66) empfangen werden, um Pulverzufuhrventilregulator (40), Wasserventilaktor (56) und Batch-Reaktorantriebsregulator (18) zu steuern.

7. Batch-Produktions- und kontinuierliche Aufbringungsvorrichtung (2) nach einem der vorstehenden Ansprüche, weiter umfassend:
einen Beladungsmesssensor (20) in erfassender Kommunikation mit Batch-Reaktor (10), wobei Datenprozessor/Speicher-Einheit (112) in empfangender Kommunikation mit Beladungsmesssensor (20) ist.

8. Batch-Produktions- und kontinuierliche Aufbringungsvorrichtung (2) nach einem der vorstehenden Ansprüche, weiter umfassend:
eine Pulverkastenrüttelvorrichtung (32) in Kommunikation mit Pulverkasten (30),
einen Pulverkastenrüttelvorrichtungsaktor (34), wobei Pulverkastenrüttelvorrichtungsaktor (34) in steuernder Kommunikation mit Pulverkastenrüttelvorrichtung (32) ist;
eine Produktgefäßrüttelvorrichtung (62) in Kommunikation mit Produktgefäß (60), und
einen Produktgefäßrüttelaktor (64), wobei Produktgefäßrüttelaktor (64) in steuernder Kommunikation mit Produktgefäßrüttelvorrichtung (62) ist.

9. Batch-Produktions- und kontinuierliche Aufbringungsvorrichtung (2) nach einem der vorstehenden Ansprüche, wobei:
Batch-Reaktorantrieb (16) dazu konfiguriert ist, mindestens 7500 Watt mechanische Leistung an Mischbaugruppe (17) zuzuleiten.

10. Prozess zur Batch-Produktion und kontinuierlichen Aufbringung einer feuerfesten Formulierung, umfassend:
(a) Bereitstellen einer Batch-Produktions- und kontinuierlichen Aufbringungsvorrichtung (2) nach einem der Ansprüche 1 bis 9;
(b) Bereitstellen von Anweisungen an Steuereinheit (100).
(c) Nutzen von Datenprozessor/Speicher-Einheit (112), Pulverzufuhrventilregulator (40) und Pulverzufuhrventil (38) und Daten von Produktgefäßinhaltssensor (66), um den Transfer von Pulver von Pulverkasten (30) zu Batch-Reaktor (10) zu steuern, um Batch-Reaktor (10) zu beladen;
(d) Nutzen von Datenprozessor/Speicher-Einheit (112), Batch-Reaktorantriebsregulator (18), Batch-Reaktorantrieb (16) und Daten von Produktgefäßinhaltssensor (66), um Mischbaugruppe (17) in Batch-Reaktor (10) zu aktivieren, steuern und deaktivieren, um das Pulver zu verarbeiten, um ein Produkt zu bilden;
(e) Nutzen von Datenprozessor/Speicher-Einheit (112), Batch-Reaktortüraktor (24) und Batch-Reaktortür (22) und Daten von Produktgefäßinhaltsensor (66), um das Produkt von Batch-Reaktor (10) in Produktgefäß (60) zuzuführen;
(f) Transferieren des Produkts von Produktgefäß (60) zu einer Düse (80);
(g) Bereitstellen von Luft an Düse (80);
(h) Kombinieren des Produkts mit Luft innerhalb von Düse (80);
(i) Sprühen der kombinierten Luft und des Produkts; und
(j) Wiederholen der Schritte (c), (d) und (e), um eine kontinuierliche Versorgung von Produkt zu produzieren; und
wobei Batch-Prozess- und kontinuierliche Aufbringungsvorrichtung (2) weiter eine Wasserversorgung (50), ein Wasserventil (54) und einen Wasserventilaktor (56) umfasst, wobei Batch-Reaktor (10) weiter einen Batch-Reaktorwasserzufuhreinlass (14) umfasst; wobei Wasserversorgung (50) sich durch Wasserventil (54) zu Batch-Reaktorwasserzufuhreinlass (14) erstreckt; wobei Wasserventilaktor (56) in steuernder Kommunikation mit Wasserventil (54) ist und wobei Datenprozessor/Speicher-Einheit (112) in steuernder Kommunikation mit Wasserventilaktor (56) ist; und wobei Schritt (c) weiter umfasst:
(c') Nutzen von Datenprozessor/Speicher-Einheit (112), Wasserventilaktor (56), Wasserventil (54) und Daten von Produktgefäßinhaltssensor (66), um die Eingabe von Wasser zu Batch-Reaktor (10) zu steuern.

11. Prozess zur Batch-Produktion und kontinuierlichen Aufbringung einer feuerfesten Formulierung nach Anspruch 10, wobei der Transfer von Pulver von Pulverkasten (30) zu Batch-Reaktor (10) und die Eingabe von Wasser zu Batch-Reaktor (10) ermöglicht wird, falls Datenprozessor/Speicher-Einheit (112) bestimmt, dass Batch-Reaktor (10) nicht beladen ist, und dass Produktgefäß (60) das Produkt, das aus dem Pulver zu produzieren ist, und Wasser, das in Batch-Reaktor (10) einzugeben ist, aufnehmen kann, und dass mindestens eines von einer Systeminitialisierung und einem Sprühen stattfindet.

12. Prozess zur Batch-Produktion und kontinuierlichen Aufbringung einer feuerfesten Formulierung nach einem der Ansprüche 10 und 11, wobei Batch-Prozess- und kontinuierliche Aufbringungsvorrichtung (2) weiter eine Schlämmenpumpe (70) umfasst, die einen Einlass und einen Auslass umfasst; wobei Vorrichtung (2) weiter einen Schlämmenpumpenregulator (72) umfasst; wobei der Einlass von Schlämmenpumpe (70) in Kommunikation mit dem Auslass von Produktgefäß (60) ist; wobei der Auslass von Schlämmenpumpe (70) in Kommunikation mit dem Einlass von Düse (80) ist; und wobei Schlämmenpumpenregulator (72) in steuernder Kommunikation mit Schlämmenpumpe (70) ist; wobei Datenprozessor/Speicher-Einheit (112) in steuernder Kommunikation mit Schlämmenpumpenregulator (72) ist; und wobei Schritt (d) umfasst:
Aktivieren von Mischbaugruppe (17), falls Datenprozessor/Speicher-Einheit (112) bestimmt, dass Schlämmenpumpe (70) aktiviert ist, dass Batch-Reaktor (10) beladen ist und dass Produktgefäß (60) den Inhalt von Batchreaktor (10) aufnehmen kann;
Aktivieren von Mischbaugruppe (17) während einer Systeminitialisierung, falls Batch-Reaktor (10) beladen ist und Produktgefäß (60) den Inhalt von Batch-Reaktor (10) aufnehmen kann;
Pausieren von Mischbaugruppe (17), falls Datenprozessor/Speicher-Einheit (112) bestimmt, dass Schlämmenpumpe (70) aktiviert ist, dass Batch-Reaktor (10) beladen ist und dass Produktgefäß (60) den Inhalt von Batch-Reaktor (10) nicht aufnehmen kann;
Deaktivieren von Mischbaugruppe (17), falls Datenprozessor/Speicher-Einheit (112) bestimmt, dass Batch-Verarbeitung abgeschlossen ist;
Deaktivieren von Mischbaugruppe (17), falls Datenprozessor/Speicher-Einheit (112) bestimmt, dass Schlämmenpumpe (70) deaktiviert ist.

13. Prozess zur Batch-Produktion und kontinuierlichen Aufbringung einer feuerfesten Formulierung nach einem der Ansprüche 10, 11 und 12, wobei Batch-Prozess- und kontinuierliche Aufbringungsvorrichtung (2) weiter einen Beladungsmesssensor (20) in erfassender Kommunikation mit Batch-Reaktor (10) umfasst, wobei Datenprozessor/Speicher-Einheit (112) in empfangender Kommunikation mit Beladungsmesssensor (20) ist; und
wobei Daten von Beladungsmesssensor (20) verwendet werden, um den Transfer von Pulver von Pulverkasten (30) zu Batch-Reaktor (10) zu steuern, um Batch-Reaktor (10) zu beladen und die Versorgung von Wasser zu Batch-Reaktor (10) zu steuern.

## Revendications

1. Un dispositif de production par lots et d'application continue (2), comprenant :
un bac à poudre (30) ayant une sortie ;
une vanne d'alimentation en poudre (38) située au niveau de la sortie du bac à poudre ;
un régulateur de vanne d'alimentation en poudre (40) en communication de commande avec la vanne d'alimentation en poudre (38);
un réacteur discontinu (10) comprenant une entrée (12), une porte (22), un entraînement de réacteur discontinu (16), un dispositif de mélange (17), un régulateur d'entraînement de réacteur discontinu (18), une porte (22), et un actionneur de porte de réacteur discontinu (24) ; dans lequel la sortie du bac à poudre (30) est en communication avec l'entrée (12) du réacteur discontinu ; dans lequel le régulateur d'entraînement de réacteur discontinu (18) est en communication de contrôle avec l'entraînement de réacteur discontinu (16) ; dans lequel l'entraînement du réacteur discontinu (16) est en communication mécanique avec le dispositif de mélange (17); et dans lequel un actionneur de porte de réacteur discontinu (24) est en communication de contrôle avec la porte (22);
un récipient de produit (60) ayant une entrée et une sortie, dans lequel l'entrée du récipient de produit (60) est configurée pour recevoir le contenu du réacteur discontinu (10) passant par la porte (22);
un capteur de contenu du récipient de produit (66) en communication de détection avec la quantité de contenu (68) du récipient de produit (60) ;
un contrôleur (100) comprenant une unité de traitement/stockage de données (112) ; dans lequel l'unité de traitement/stockage de données (112) est en communication de réception avec le capteur de contenu de récipient de produit (66), dans lequel l'unité de traitement/stockage de données (112) est en communication de contrôle avec le régulateur de vanne d'alimentation en poudre (40) ; dans lequel l'unité de traitement/stockage de données (112) est en communication de contrôle avec le régulateur d'entraînement de réacteur discontinu (18); et dans lequel l'unité de traitement/stockage de données (112) est en communication de contrôle avec l'actionneur de porte du réacteur discontinu (24) ;
une buse (80) ayant une entrée et une sortie, dans laquelle l'entrée de la buse reçoit la sortie de la sortie du récipient de produit (60) ; dans lequel l'entrée de la buse reçoit la sortie d'un tuyau d'air (86) ; et dans lequel le débit d'air dans le tuyau d'air (86) est régulé par une vanne d'alimentation en air (88) et commandé par un actionneur de vanne d'alimentation en air (90),
une vanne d'eau (54) ;
une alimentation en eau (50), dans laquelle l'alimentation en eau (50) s'étend à travers une vanne d'eau (54) à une entrée d'alimentation en eau de réacteur discontinu (14) du réacteur discontinu (10) ; et
un actionneur de vanne d'eau (56) ; dans lequel l'actionneur de vanne d'eau (56) est en communication de contrôle avec une vanne d'eau (54), et dans lequel une unité de traitement/stockage de données (112) est en communication de contrôle avec l'actionneur de vanne d'eau (56).

2. Un dispositif de production par lots et d'application continue (2) selon la revendication 1, comprenant en outre :
un dispositif d'alimentation en poudre (42) comprenant une entrée et une sortie, dans lequel la sortie du bac à poudre (30) est en communication avec l'entrée du dispositif d'alimentation en poudre (42), dans lequel la sortie du distributeur de poudre (42) est en communication avec l'entrée (14) du réacteur discontinu (10); et
un régulateur d'alimentation en poudre (44), dans lequel l'alimentation en poudre (44) est en communication de contrôle avec le dispositif d'alimentation en poudre (42) ; et dans lequel l'unité de traitement/stockage de données (112) est en communication de contrôle avec le régulateur d'alimentation en poudre (44).

3. Un dispositif de production par lots et d'application continue (2) selon l'une quelconque des revendications précédentes, comprenant en outre :
une pompe à boue (70) comprenant une entrée et une sortie, dans laquelle l'entrée de la pompe à boue (70) est en communication avec la sortie du récipient de produit (60) ; dans laquelle la sortie de la pompe à boue (70) est en communication avec l'entrée de la buse (80) ; et
un régulateur de pompe à boue (72) ; dans lequel le régulateur de pompe à boue (72) est en communication de contrôle avec une pompe à boue (70) ; dans lequel l'unité de traitement/stockage de données (112) est en communication de contrôle avec le régulateur de pompe à boue (72).

4. Un dispositif de production par lots et d'application continue (2) selon la revendication 3, dans lequel:
l'unité de traitement/stockage de données (112) est configurée pour générer un rapport entre le débit au travers de la pompe à boue (70) et le débit au travers du tuyau d'air (86), et à maintenir le rapport entre le débit de la pompe à boue et le débit du tuyau d'air lorsque le débit du tuyau d'air est modifié.

5. Un dispositif de production par lots et d'application continue (2) selon la revendication 4, comprenant en outre :
un capteur de débit d'eau (52) en communication de détection avec l'alimentation en eau (50), dans lequel l'unité de traitement/stockage de données (112) est en communication de réception avec le capteur de débit d'eau (52).

6. Un dispositif de production par lots et d'application continue (2) selon la revendication 4 ou 5, dans lequel l'unité de traitement/stockage de données (112) est configurée pour traiter les données reçues du capteur de contenu du récipient de produit (66) afin de commander le régulateur de vanne d'alimentation en poudre (40), l'actionneur de vanne d'eau (56) et le régulateur d'entraînement de réacteur discontinu (18).

7. Un dispositif de production par lots et d'application continue (2) selon l'une quelconque des revendications précédentes, comprenant en outre :
un capteur de mesure de charge (20) en communication de détection avec le réacteur discontinu (10), dans lequel l'unité de traitement/stockage de données (112) est en communication de réception avec le capteur de mesure de charge (20).

8. Un dispositif de production par lots et d'application continue (2) selon l'une quelconque des revendications précédentes, comprenant en outre :
un dispositif vibrant de bac à poudre (32) en communication avec le bac à poudre (30), un actionneur de dispositif vibrant de bac à poudre (34) ; dans lequel l'actionneur de dispositif vibrant de bac à poudre (34) est en communication de commande avec le dispositif vibrant du bac à poudre (32);
un dispositif vibrant de récipient de produit (62) en communication avec le récipient de produit (60), et
un actionneur vibrant pour récipient de produit (64), dans lequel l'actionneur vibrant pour récipient de produit (64) est en communication de contrôle avec le dispositif vibrant du récipient de produit (62).

9. Un dispositif de production par lots et d'application continue (2) selon l'une quelconque des revendications précédentes, dans lequel :
l'entraînement du réacteur discontinu (16) est configuré pour fournir au moins 7500 watts de puissance mécanique au dispositif de mélange (17).

10. Un procédé de production par lots et d'application continue d'une formulation réfractaire, comprenant :
(a) la fourniture d'un dispositif de production par lots et d'application continue (2) selon l'une quelconque des revendications 1 à 9 ;
(b) la fourniture des instructions au contrôleur (100) ;
(c) l'utilisation de l'unité de traitement/stockage de données (112), du régulateur de vanne d'alimentation en poudre (40) et de la vanne d'alimentation en poudre (38), et les données provenant du capteur de contenu du récipient de produit (66) pour contrôler le transfert d'une poudre du bac à poudre (30) au réacteur discontinu (10) afin de charger le réacteur discontinu (10);
(d) l'utilisation de l'unité de traitement/stockage de données (112), du régulateur d'entraînement de réacteur discontinu (18), de l'entraînement du réacteur discontinu (16), et les données du capteur de contenu du récipient de produit (66) pour activer, contrôler et désactiver le dispositif de mélange (17) dans le réacteur discontinu (10) afin de traiter la poudre pour former un produit ;
(e) l'utilisation de l'unité de traitement/stockage de données (112), de l'actionneur de porte du réacteur discontinu (24), et la porte du réacteur discontinu (22), et les données du capteur de contenu du récipient de produit (66) pour introduire le produit du réacteur discontinu (10) dans le récipient de produit (60) ;
(f) le transfert du produit du récipient de produit (60) vers une buse (80) ;
(g) la fourniture de l'air à la buse (80);
(h) la combinaison du produit avec de l'air dans la buse (80) ;
(i) la pulvérisation de l'air et du produit combinés ; et
(j) la répétition des étapes (c), (d) et (e) pour produire un approvisionnement continu de produit ;
et
dans lequel le procédé par lots et le dispositif d'application continue (2) comprend en outre une alimentation en eau (50), une vanne d'eau (54) et un actionneur de vanne d'eau (56), dans lequel le réacteur discontinu (10) comprend en outre une entrée d'alimentation en eau de réacteur discontinu (14); dans lequel l'alimentation en eau (50) s'étend à travers la vanne d'eau (54) jusqu'à l'entrée d'alimentation en eau du réacteur discontinu (14) ; dans lequel l'actionneur de vanne d'eau (56) est en communication de contrôle avec la vanne d'eau (54), et dans lequel l'unité de traitement/stockage de données (112) est en communication de contrôle avec l'actionneur de vanne d'eau (56); et dans lequel l'étape (c) comprend en outre :
(c') l'utilisation de l'unité de traitement/stockage de données (112), de l'actionneur de vanne d'eau (56), de la vanne d'eau (54) et les données du capteur de contenu du récipient de produit (66) pour contrôler l'entrée d'eau dans le réacteur discontinu (10).

11. Un procédé de production par lots et d'application continue d'une formulation réfractaire selon la revendication 10, dans laquelle le transfert de poudre à partir du bac à poudre (30) au réacteur discontinu (10) et l'entrée d'eau vers le réacteur discontinu (10) est activée si l'unité de traitement/stockage de données (112) détermine que le réacteur discontinu (10) est non chargé, et que le récipient de produit (60) peut contenir le produit à produire à partir de la poudre et de l'eau à introduire dans le réacteur discontinu (10), et qu'au moins une initialisation du système et une pulvérisation se produit.

12. Un procédé de production par lots et d'application continue d'une formulation réfractaire selon l'une quelconque des revendications 10 et 11, dans lequel le dispositif de production par lots et d'application continue (2) comprend en outre une pompe à boue (70) comprenant une entrée et une sortie ; dans lequel le dispositif (2) comprend en outre un régulateur de pompe à boue (72); dans lequel l'entrée de la pompe à boue (70) est en communication avec la sortie du récipient de produit (60) ; dans lequel la sortie de la pompe à boue (70) est en communication avec l'entrée de la buse (80) ; et dans lequel le régulateur de pompe à boue (72) est en communication de contrôle avec la pompe à boue (70) ; dans lequel l'unité de traitement/stockage de données (112) est en communication de contrôle avec le régulateur de pompe à boue (72); et dans lequel l'étape (d) comprend :
l'activation du dispositif de mélange (17) si l'unité de traitement/stockage de données (112) détermine que la pompe à boue (70) est activée, que le réacteur discontinu (10) est chargé et que le récipient de produit (60) peut contenir le contenu du réacteur discontinu (10) ;
l'activation du dispositif de mélange (17) durant une initialisation du système si le réacteur discontinu (10) est chargé, et que le récipient de produit (60) peut contenir le contenu du réacteur discontinu (10); la mise en pause du dispositif de mélange (17) si l'unité de traitement/stockage de données (112) détermine que la pompe à boue (70) est activée, que le réacteur discontinu (10) est chargé et que le récipient de produit (60) ne peut pas contenir le contenu du réacteur discontinu (10) ;
la désactivation de l'ensemble de mixage (17) si l'unité de traitement de données/stockage (112) détermine que le traitement par lots est complété ;
la désactivation de l'ensemble de mixage (17) si l'unité de traitement/stockage de données (112) détermine que la pompe à boue (70) est désactivée.

13. Un procédé de production par lots et d'application continue d'une formulation réfractaire selon l'une quelconque des revendications 10, 11 et 12, dans lequel le dispositif de production par lots et d'application continue (2) comprend en outre un capteur de mesure de charge (20) en communication de détection avec le réacteur discontinu (10), dans lequel l'unité de traitement/stockage de données (112) est en communication de réception avec le capteur de mesure de charge (20) ; et
dans lequel les données provenant du capteur de mesure de charge (20) sont utilisées pour contrôler le transfert de poudre du bac à poudre (30) au réacteur discontinu (10) pour charger le réacteur discontinu (10), et pour contrôler l'alimentation en eau du réacteur discontinu (10).
